(19) Europäisches Patentamt
European Patent Office
Office européen des brevets

(11) **EP 0 632 944 B1**

(12) **EUROPÄISCHE PATENTSCHRIFT**

(45) Veröffentlichungstag und Bekanntmachung des Hinweises auf die Patenterteilung:
**07.06.2000 Patentblatt 2000/23**

(51) Int. Cl.[7]: **H04H 5/00**, H04S 3/00, H04S 3/02, H04B 1/66

(21) Anmeldenummer: **93920518.3**

(22) Anmeldetag: **17.03.1993**

(86) Internationale Anmeldenummer:
**PCT/EP93/00629**

(87) Internationale Veröffentlichungsnummer:
**WO 93/19542 (30.09.1993 Gazette 1993/24)**

(54) **VERFAHREN ZUM ÜBERTRAGEN ODER SPEICHERN DIGITALISIERTER, MEHRKANALIGER TONSIGNALE**

PROCESS FOR TRANSMITTING OR STORING DIGITALIZED, MULTI-CHANNEL AUDIO SIGNALS

PROCEDE DE TRANSMISSION OU DE MEMORISATION DE SIGNAUX AUDIO NUMERISES A PLUSIEURS CANAUX

(84) Benannte Vertragsstaaten:
**AT BE CH DE DK ES FR GB IT LI LU NL SE**

(30) Priorität: **24.03.1992 DE 4209544**

(43) Veröffentlichungstag der Anmeldung:
**11.01.1995 Patentblatt 1995/02**

(73) Patentinhaber:
**Institut für Rundfunktechnik GmbH
80939 München (DE)**

(72) Erfinder:
- **SILZLE, Andreas
  D-81243 München (DE)**
- **STOLL, Gerhard
  D-85406 Zolling (DE)**
- **THEILE, Günther
  D-82544 Thanning (DE)**
- **LINK, Martin
  D-80939 München (DE)**

(74) Vertreter:
**Konle, Tilmar, Dipl.-Ing. et al
Patentanwalt
Benderstrasse 23a
81247 München (DE)**

(56) Entgegenhaltungen:
**EP-A- 0 402 973**

- **ICASSP 92 - IEEE INTERNATIONAL CONFERENCE ON ACOUSTICS,SPEECH AND SIGNAL PROCESSING Bd. 2, 23. M{rz 1992, SAN FRANCISCO, US Seiten 569 - 572 J.D JOHNSTON ET AL. 'SUM-DIFFERENCE STEREO TRANSFORM CODING'**
- **ICASSP 91 - IEEE INTERNATIONAL CONFERENCE ON ACOUSTICS, SPEECH AND SIGNAL PROCESSING Bd. 5, 14. Mai 1991, TORONTO, CA Seiten 3601 - 3604 R.G. VAN DER WAAL ET AL. 'Subband Coding of Stereophonic Digital Audio Signals'**
- **ICASSP 89 - IEEE INTERNATIONAL CONFERENCE ON ACOUSTICS, SPEECH AND SIGNAL PROCESSING Bd. 3, 23. Mai 1989, GLASGOW, GB J.D. JOHNSTON 'Perceptual Transform Coding of Wideband Stereo Signals' in der Anmeldung erw{hnt**

**Beschreibung**

Die Erfindung bezieht sich auf ein Verfahren gemäß dem Oberbegriff der nebengeordneten Ansprüche 1, 12 und 14.

Für die Übertragung und Speicherung digitaler Tonsignale ist es bekannt (DE 34 40 613 und DE 36 39 753), mit Hilfe einer Codierung in Teilbändern und der Anwendung eines psychoakustischen Modells eine Datenreduktion vorzunehmen. Dabei wird das digitalisierte, breitbandige Tonsignal durch eine Vielzahl spektraler Teilbandsignale dargestellt, wobei die Quantisierung der Abtastwerte in den einzelnen Teilbändern nach Maßgabe der Mithörschwelle des menschlichen Gehörs erfolgt. Der mit dieser "monofonen Codierung" erreichbare Datenreduktionsfaktor für sehr hochwertige Audiosignale hat bei 48 kHz Abtastfrequenz und 16 bit-linearer Quantisierung etwa den Wert 6, was einer Datenrate von 2 x 128 kbit/s pro stereofones Tonsignal entspricht.

Bekannt sind ferner Maßnahmen zur Steigerung des Datenreduktionsfaktors bei der Codierung zweikanaliger, stereofoner Signale, welche darauf beruhen, redundante Signalanteile im linken und rechten Kanal sowie solche Anteile zu unterdrücken, die bezüglich der stereofonen Wirkung irrelevant sind. Zwei unterschiedliche Ausführungsformen dieser "stereofonen Codierung" sind in der europäischen Patentanmeldung EP-A- 0 402 973 veröffentlicht am 19.12.90 sowie in "Proceedings of the ICASSP 1989" Volume 3, Multidimensional signal processing : Audio & Electroacoustics, 23-26/5/1989 ; Conference Centre Glasgow, UK ; pages 1993-1996 beschrieben, nämlich.

-     zeitweise Übertragung von Teilband-Summensignalen im oberen Frequenzbereich und blockweise Rekonstruktion der Teilband-Signalpegel im linken und rechten Kanal mit Hilfe von Skalenfaktoren, welche die maximalen Signalpegel in den Teilbändern der linken und rechten Tonkanäle repräsentieren, und

-     Bildung von Summen-(M=MONO)- und Differenz-(S=SEITEN)-Signalen aus dem linken (L) und rechten (R) Tonsignal gemäß der Matrizierung M=L+R und S=L-R , wobei nach Maßgabe der für das Summensignal M ermittelten Mithörschwelle die Decodierung der Summen- und Differenzsignale erfolgt.

Wird die getrennte Codierung in den Teilbändern des linken und rechten Tonkanals durch die stereofone Codierung in der Weise ergänzt, daß eine dieser Methoden oder eine Kombination aus beiden Methoden angewandt wird, so läßt sich der Datenreduktionsfaktor von dem Wert 6 auf etwa den Wert 8 steigern. Ist beispielsweise für die Übertragung von zwei unabhängigen Monosignalen mit derselben Qualität wie eine 16 bit-lineare Quantisierung eine Bitrate von 256 kbit/s erforderlich, so sind bei stereofoner Codierung für die Übertragung eines zweikanaligen Stereosignals derselben subjektiven Qualität nur 192 kbit/s erforderlich.

Demgegenüber besteht die Aufgabe der Erfindung darin, eine noch stärkere Datenreduktion bei zweikanaligen oder mehrkanaligen stereofonen Signalen zu erreichen.

Diese Aufgabe wird erfindungsgemäß durch die kennzeichnenden Merkmale der nebengeordneten Ansprüche 1, 12 oder 14 gelöst.

Vorteilhafte Ausgestaltungen und Weiterbildungen des erfindungsgemäßen Verfahrens ergeben sich aus den Unteransprüchen.

Die Erfindung geht von der Überlegung aus, daß sich die Bitrate für ein teilbandcodiertes, stereofones Signal noch beträchtlich weiter senken läßt, wenn diverse Phänomene des räumlichen Hörens und bekannte Modelle der binauralen Signalverarbeitung im menschlichen Gehör berücksichtigt werden. Es zeigt sich nämlich, daß ein hoher Informationsanteil des stereofonen Signals irrelevant ist. Insbesondere kann das menschliche Gehör für bestimmte spektrale Komponenten und innerhalb bestimmter Zeitintervalle keine räumlichen Unterschiede wahrnehmen, d. h., innerhalb bestimmter Zeitintervalle ist für bestimmte Spektralbereiche eine vollständige Kanaltrennung nicht notwendig. Ferner kann infolge des Effektes der "Nachbarkanal-Verdeckung" die Quantisierung oder Unterdrückung einzelner Teilbandsignale nach Maßgabe der höchsten Nachbarkanal-Mithörschwelle erfolgen, wenn die zugehörige Gleichkanal-Mithörschwelle niedriger liegt. Allerdings muß für die Nutzung der Nachbarkanal-Verdeckung der Effekt einer reduzierten Verdeckung bei räumlich getrennten Maskierern ("Masking Level Difference", MLD) berücksichtigt und daher die Wiedergabeanordnung definiert werden. Eine derartige Optimierung der stereofonen Codierung hat insbesondere bei zukünftigen digitalen Tonsystemen mit einer höheren Anzahl von Übertragungs- und Wiedergabekanälen eine besondere Bedeutung. Mit der Erhöhung der Anzahl der Tonkanäle lassen sich die Richtungsstabilität der Tondarstellung im Abbildungsbereich zwischen den vorderen Lautsprechern sowie die Möglichkeiten der räumlichen Tondarstellung steigern. Hierzu werden beispielsweise der linke und rechte Lautsprecher durch einen Centersowie zwei Surround-Lautsprecher ergänzt, so daß drei weitere Tonübertragungskanäle erforderlich sind. Eine mit der Steigerung der Kanalzahl proportional wachsende Bitrate stellt in vielen Fällen eine zu hohe Belastung der Übertragungskapazität dar. Beispielsweise wäre bereits eine Verdopplung der Bitrate für zusätzliche Center- und Surroundkanäle im zukünftigen digitalen Hörfunk nicht akzeptabel, wenn die Anzahl der Programme entsprechend halbiert werden müßte.

Es wird daher speziell angestrebt, die Bitrate für fünfkanalige, stereofone Tonsignale (3 Frontsignale L (Links), C (Center), R (Rechts) und 2 Surroundsignale LS (Links-Surround), RS (Rechts-Surround); abgekürzt mit "3/2-Stereosignale" von 5 x (192:2) = 480 kbit/s auf etwa 300 kbit/s zu verringern. Eine wichtige Bedingung für die Einführung mehrkanaliger Tonübertragungssysteme ist in vielen Fällen die Kompatibilität mit vorhandenen digitalen Zweikanal-Stereoempfängern. Da die Übertragungskapazität oft zu begrenzt ist, um entsprechend dem Simulcast-Prinzip neben dem konventionellen Zweikanal-Signal gemäß ISO/EMPEC-Standard 11172-3 ein vollständiges Mehrkanal-Signal zu übertragen, muß mit Hilfe von Kompatibilitätsmatrizierungen vor der Übertragung aus dem Mehrkanal-Stereosignal ein Zweikanal-Stereo-Basissignal Lo, Ro gewonnen werden, welches für die Wiedergabe mit Zweikanal-Stereoempfängern geeignet ist. Für eine Kompatibilitätsmatrizierung für fünfkanalige (3/2)-Stereosignale kann beispielsweise folgendes Gleichungssystem vorgesehen werden:

$$T1 = L + xC + yLS = Lo \qquad (1)$$

$$T2 = R + xC + yRS = Ro \qquad (2)$$

$$T3 = xC \qquad (3)$$

$$T4 = yLS \qquad (4)$$

$$T5 = yRS \qquad (5)$$

wobei x und y Koeffizienten im Bereich von beispielsweise 0,5 bis 0,8 sind.

Die Übertragungssignale T1 und T2 bilden das Zweikanal-Stereo-Basissignalpaket Lo/Ro, während die zusätzlichen Übertragungssignale T3, T4, T5 die für die Dematrizierungen notwendige Information enthalten. Sollen die ursprünglichen fünfkanaligen Stereosignale L, C, R, LS, RS decoderseitig wieder vollständig rekonstruiert werden, so lautet die Dematrizierungsvorschrift:

$$L' = T1-T3-T4 \qquad (6)$$

$$R' = T2-T3-T5 \qquad (7)$$

$$C' = T3/x \qquad (8)$$

$$LS' = T4/y \qquad (9)$$

$$RS' = T5/y \qquad (10)$$

Eine vollständige Rekonstruktion der ursprünglichen fünfkanaligen Stereosignale ist jedoch nicht notwendig, da - wie schon erwähnt - das Gehör innerhalb bestimmter Zeitintervalle für bestimmte Spektralbereiche eine unvollständige Kanaltrennung toleriert. Dementsprechend können bestimmte Teilbandsignale der Übertragungssignale T3, T4 und T5 in den Gleichungen (3), (4) und (5) zeitweise und signalabhängig zu Null gesetzt werden (sogenannte "Punktierung"). Eine weitere Überlegung besteht daher darin, die Datenrate für das Zusatzsignalpaket T3/T4/T5 so weit wie möglich zu senken, indem ausschließlich die für die räumliche Wahrnehmung relevanten Signalanteile extrahiert werden. Die Codierung der Stereo-Basissignale Lo und Ro bleibt hiervon unberührt, so daß Kompatibilität mit bestehenden Zweikanal-Decodern gewährleistet ist. Anstelle einer mehrkanaligen Tondarstellung lassen sich auch mehrsprachige, einfache Programme oder Kommentarkanäle vorsehen, insbesondere für die Anwendung in zu-künftigen Fernsehsystemen mit digitalem Ton. In diesem Fall wird keine Matrizierung vorgesehen.

Die Erfindung wird nachstehend anhand von Ausführungsbeispielen näher erläutert.

Bei der Erfindung werden neben der Redundanz vor allem die Grenzen des Gehörs bei der räumlichen Analyse des Schallfeldes im Sinne einer stereofonen Codierung möglichst vollständig genutzt, indem die Bitzuweisung für individuelle Teilbänder einzelner Tonkanäle blockweise nach Maßgabe einer gemeinsamen Analyse der stereofonen Signale aller Tonkanäle erfolgt. Hierbei wird die Quantisierung nicht nur unter Berücksichtigung der Nachbarkanal-Verdeckung festgelegt, sondern darüber hinaus unter Berücksichtigung der subjektiv hinreichenden Kanaltrennung, wie im folgenden näher dargelegt werden soll.

Eine signalabhängig gesteuerte, gehörangepaßte, blockweise Reduktion der Kanaltrennung individueller Teilbandsignale führt zu entsprechender Datenreduktion, wenn die im Encoder zu "mono" gesetzten Teilbandsignale nur in einem der Kanäle übertragen werden und im Decoder ein geeigneter Austausch einzelner Teilbandsignale möglich ist. Die betreffenden Teilbänder der restlichen Tonkanäle werden nicht übertragen. Hierzu sind im Encoder und im Decoder Netzwerke ("Kombinierer" bzw. "Dekombinierer") vorgesehen, die nach Maßgabe von mitübertragenen Steuerinformationen, die aus einer encoderseitigen Signalanalyse gebildet werden und individuelle Teilbandsignale in demselben Frequenzbereich einzelnen Tonkanälen zuweisen oder interkanalweise verknüpfen. Wie im folgenden noch erläutert wird, ist es besonders vorteilhaft, die teilband- und blockweise Reduktion der Kanaltrennung auf die Abtastwerte zu beschränken und die encoderseitig gewonnenen, als Nebeninformation übertragenen, ursprünglichen Skalenfaktoren der einzelnen Tonkanäle für die Rückgewinnung der Teilbandsignalpegel einzusetzen.

Ein beispielhaftes Grundschema eines Encoders und Decoders für n Tonkanäle wird im folgenden beschrieben. Im Encoder werden die digitalisierten, linear-quantisierten Tonsignale S1 bis Sn einer Teilbandfilterbank zugeführt und jeweils in i Teilbänder zerlegt. Die resultierenden nxi Teilbandsignale durchlaufen nacheinander einen Kombinierer, einen Skalierer sowie einen Quantisierer und werden zusammen mit den in einer Analysestufe gewonnenen Nebeninformationen BAL (Bit-Zuweisungs- bzw.-Allokationsinformation), COM (Kombinier-Modus-Information)und SCF (Skalenfaktoren) in einem Multiplexer zu einem Multiplexsignal MUX zusammengefaßt. Dem Kombinierer wird von der Analysestufe ein Steuersignal COS zugeführt, welches im Kombinierer eine interkanalweise Zusammenfassung individueller Teilbandsignale steuert. In dem Skalierer werden die Abtastwerte nach Maßgabe der Skalenfaktorinformation SCF normiert, während in dem Quantisierer nach Maßgabe der Bit-Zuweisungsinformation BAL die Quantisierung der normierten Abtastwerte erfolgt. Wie die Berechnung aller Nebeninformationen zur Steuerung des Kombinierers, des Skaliers und des Quantisierers durch die Analysestufe erfolgt, wird später noch im einzelnen dargelegt.

In dem Decoder werden nach der Zerlegung des empfangenen Datenstroms MUX in einem dem Demultiplexer nachgeschalteten Dequantisierer die Abtastwerte der Teilbandsignale mit Hilfe der übertragenen Bit-Zuweisungsinformation BAL in normierter Form zurückgewonnen. Die zurückgewonnenen Abtastwerte werden nach Maßgabe der Kombinier-Modus-Information COM in einem Dekombinierer auf n Tonkanäle teilbandweise aufgeteilt. Erst danach erfolgt eine Multiplikation der Teilbandsignale mit den Skalenfaktoren SCF in Multiplizierstufen. Nach der inversen Filterung der entnormierten Teilbandsignale in den Synthesefilterbänken liegen an den Ausgängen des Decoders die breitbandigen, digitalisierten Tonsignale S1' bis Sn' vor.

Eine besondere Ausführungsform des erfindungsgemäßen Verfahrens wird nachstehend beschrieben Berücksichtigt ist hier die eingangs beschriebene Forderung der Kompatibilität mit bestehenden Teilband-Codierern gemäß dem digitalen Standard ISO 11172-3 sowie die Forderung nach flexibler Nutzung der Tonübertragungskanäle. Ausgegangen wird im Falle des Encoders von fünfkanaligen, stereofonen, digitalisierten Tonsignalen, nämlich 3 Frontsignalen Links (L), Rechts (R) und Center (C) sowie zwei Surroundsignalen Links-Surround (LS) und Rechts-Surround (RS). Aus Kompatibilitätsgründen zu bestehenden Standard-Teilband-Codierern werden die in Teilbandfiltern in jeweils i Teilbänder gefilterten Frontsignale L und R in einem Kombinierer beispielsweise gemäß vorstehender Gleichungen (1) und (2) zu einem Zweikanal-Stereo-Basissignalpaket Lo'/Ro' matriziert, welches in einer als "Teilband-Encoder und Standard-Multiplexer" bezeichneten Stufe in bekannter Weise teilband-codiert und in einen standardisierten Bitstrom gemäß ISO-Standard 11172-3 unter Bildung eines kompatiblen Stereosignals MUXo umgewandelt wird.

Die in Teilbandstufen in jeweils i Teilbänder gefilterten Center- und Surround-Signale C, LS, RS werden in dem Kombinierer beispielsweise gemäß Gleichungen (3) bis (5) zu einem teilbandgefilterten Zusatzsignalpaket T3/T4/T5 matriziert. Dieses Zusatzsignalpaket T3/T4/T5 wird in gleicher Weise wie in der eingangs beschriebenen Ausführungsform einer Skalierung, einer Quantisierung und einer Multiplexbildung unterzogen, wobei die Steuerung des Kombinierers, des Skaliers, des Quantisierers und des Multiplexers wiederum durch eine Analysestufe erfolgt. Im Vergleich zur Analysestufe der oben beschriebenen Ausführungsform erzeugt diese Analysestufe zusätzlich eine Differenz-Skalenfaktor-information SCF sowie eine Konfigurationsinformation CFG, welche in das Multiplexsignal MUX des Multiplexers eingefügt werden. Die Analysestufe erhält von einer anwenderbedienten System-Konfigurations-Eingabe eine applikationsabhängige Information über die Art der gewünschten Verarbeitung der Eingangssignale, beispielsweise eine Fünfkanal-Datenreduktion unter Berücksichtigung der stereofonen Irrelevanz aller Kanäle (Surround-Tondarstellung) oder eine Codierung der Eingangssignale C, LS, RS unabhängig von den Frontsignalen L, R, beispielsweise für einen mehrsprachigen Fernsehton. LS, RS, C sind im letztgenannten Beispielsfall keine Surround-Kanäle, sondern alternative Sprachkanäle, wie später noch erläutert wird. Zusätzlich zu den n teilbandgefilterten Eingangssignalen erhält die Analysestufe die teilbandgefilterten Stereo-Basissignale Lo, Ro.

Die vorgenannten Eingangssignale werden in der Analysestufe entsprechend dem dort verwendeten psychoakustischen Modell und den daraus abgeleiteten, nachfolgend beschriebenen Kriterien analysiert. Ergibt die Analyse, daß eine Kanaltrennung subjektiv nicht erforderlich ist, so wird eine Aufhebung der Kanaltrennung dadurch erreicht, daß mit Hilfe der Bit-Zuweisungsinformation BAL bestimmte Teilbandsignale des Zusatzsignalpaketes C/LS/RS im Quantisierer blockweise zu Null gesetzt werden. Die Bildung des Zusatz-Multiplexsignals MUX im Multiplexer umfaßt auch quellenbezogene Fehlerschutzmaßnahmen. Die Differenz-Skalenfaktorinformation SCF besteht aus der Differenz zwischen den Skalenfaktoren SCFo der Teilbänder der Stereo-Basissignale Lo, Ro und den Skalenfaktoren SCF der Teilbänder der Zusatzsignale C, LS, RS und ermöglichen daher eine bitsparendere Codierung der Skalenfaktoren SCF. Anstelle einer expliziten Übertragung der Skalenfaktoren SCF im Multiplexsignal MUX gemäß der ersten Ausführungsform werden bei dem Encoder gemäß dieser zweiten Ausführungsform nur die Differenzwerte SCF übertragen.

Die resultierenden Bitströme MUX und MUXo des Encoders gemäß dieser zweiten Ausführungsform werden in beliebiger Weise in getrennten Datenpaketen übertragen oder gespeichert. Am Ort des Decoders gemäß dieser zweiten Ausführungsform muß gewährleistet sein, daß beide Bitströme MUX und MUXo zeitgleich verfügbar sind. Es ist ferner möglich, die resultierenden Bitströme MUX und MUXo in einem übergeordneten Multiplex zu übertragen bzw. zu speichern. Hierzu wird beispielsweise der Bitstrom MUX einer Stufe zugeführt, welche den Bitstrom MUX in geeigneter Weise in den Bitstrom MUXo unter Bildung des kombinierten Bitstroms MUXo* einfügt. Dies kann beispielsweise bei einem Datenstrom gemäß ISO-Standard 11172-3 dadurch erfolgen, daß in jedem Audio-Datenrahmen innerhalb des Feldes, das für programmbezogene Daten reserviert ist, die MUX-Daten eingefügt werden.

In dem Decoder gemäß dieser zweiten Ausführungsform werden aus dem Bitstrom MUXo in einer Stufe in bekannter Weise die Teilbandsignale des Zweikanal-Stereo-Basissignalpaketes Lo'/Ro' zurückgewonnen. Ferner werden aus dem Bitstrom MUX nach erfolgter Demultiplexbildung in einem Demultiplexer die Teilbandsignale des Zusatzsignalpaketes mit Hilfe von Dequantisierern und Multiplizierern zurückgewonnen. Die hierzu notwendigen Skalenfaktoren SCF der Teilbandsignale C, LS, RS werden in einer Kontroll-Einheit aus den von dem Demultiplexer gelieferten Differenz-Skalenfaktorinformationen SCF und den von der oben als "Standard-Demultiplexer und Teilband-Decoder" bezeichneten Stufe gelieferten Skalenfaktoren SCFo der Teilband-Basissignale Lo, Ro errechnet. Wie im Falle der ersten Ausführungsform werden die Dequantisierer von der Bit-Zuweisungsinformation BAL und die Multiplizierer von den in der Kontroll-Einheit errechneten Skalenfaktoren SCF gesteuert.

Die decodierten Teilbandsignale Lo', Ro' am Ausgang der Stufe oben als "Standard-Demultiplexer und Teilband-Decoder" bezeichneten sowie die decodierten Teilbandsignale T3', T4' und T5' am Ausgang der Multiplizierer gelangen an den Dekombinierer, wo die bereits erwähnte Kanalzuweisung oder die interkanalweise Verknüpfung der Teilbandsignale erfolgt, und zwar unter der Steuerung der Kontroll-Einheit, welche das Steuersignal COS aus den vom Demultiplexer gelieferten Zusatzinformationen COM und CFG sowie aus einem Eingabesignal EIN errechnet. Das Eingabesignal EIN wird von einem Anwender über eine Wiedergabe-Konfigurations-Eingabe eingegeben; es repräsentiert die gewünschte Abhörsituation sowie - im Falle des mehrsprachigen Fernsehtons - die gewünschte Wiedergabesprache. Desweiteren kann der Anwender über die Eingabe Vorgaben über Pegelbalance und Abhördynamik in die Kontroll-Einheit eingeben, welche nach Maßgabe dieser Eingaben die dem Dekombinierer nachgeschalteten Gewichtungsstufen steuert, welche die Teilbandsignale an den Ausgängen des Dekombinierers blockweise mit entsprechenden Gewichtungsfaktoren GEW multipliziert. Nach der anschließenden inversen Filterung in den Synthesefilterbänken liegen an den Ausgängen des Decoders gemäß dieser zweiten Ausführungsform die breitbandigen digitalisierten Tonsignale L', R', S3', S4' und S5' vor. In dem Decoder gemäß einer dritten Ausführungsform werden im Unterschied zum Decoder gemäß der zweiten Ausführungsform aus dem kombinierten Datenstrom MUXo* in der oben als "Standard-Demultiplexer und Teilband-Decoder" bezeichneten Stufe der Datenstrom MUX sowie die Skalenfaktoren SCFo der Teilband-Basissignale Lo, Ro abgetrennt und dem Demultiplexer zugeführt. Die direkte Zuführung von SCFo von der oben als "Standard-Demultiplexer und Teilband-Decoder" bezeichneten Stufe zu der Kontroll-Einheit 45 entfällt; vielmehr werden nun die Skalenfaktoren SCFo von dem Demultiplexer der Kontroll-Einheit zugeführt. Im übrigen ist der Decoder gemäß dieser dritten Ausführungsform identisch mit dem Decoder gemäß der zweiten Ausführungsform.

Für die nähere Erläuterung des erfindungsgemäßen Verfahrens an den beschriebenen Ausführungsbeispielen werden nachfolgend zunächst die der stereofonen Codierung zugrunde liegenden Gehöreigenschaften darstellt und darauf basierend die eingesetzten Maßnahmen für die Datenreduktion. Weitere Ausgestaltungen, insbesondere in Hinblick auf eine flexible Nutzung der Übertragungskanäle, werden abschließend beschrieben.

**Modell der binauralen Signalverarbeitung**

Für das räumliche Hören haben Unterschiede zwischen den Schallsignalen an beiden Ohren (interaurale Signaldifferenzen) eine hervorragende Bedeutung. In der Literatur werden mehrere Modelle unterschieden, die bereits eine weitreichende Beschreibung binauraler Effekte zulassen. Allerdings nehmen die Kenntnisse über die zugrundeliegenden physiologischen Verarbeitungsmechanismen immer mehr ab, je weiter man in die zentralen neuronalen Bereiche vordringt. Aus diesem Grunde sind die peripheren Stufen binauraler Modelle zumindest in ihrer grundsätzlichen Konzeption einheitlich, während die zentralen Modellbereiche entweder auf eng umgrenzte psychoakustische Effekte spezialisiert sind oder nur unscharfe Aussagen ermöglichen. Ein Modell der binauralen Signalverarbeitung wird nachstehend beschrieben. Die relativ genaue Beschreibung der peripheren Stufe sowie recht allgemeine Annahmen über die Funktionsweise der zentralen Verarbeitungsstufe ("Binauraler Processor") erlauben eine grobe Erfassung der "binauralen Information". Das Modell enthält folgende Stufen:

Außenohr-Filter:

Die Wirkung des Außenohres (Ohrmuschel, Kopf, Rumpf) auf das linke und rechte Ohrsignal ist durch Außenohr-Übertragungsfunktionen (Außenohr-Filter") beschrieben. Hierdurch erfolgt eine räumliche Zerlegung sowie eine spektrale und zeitliche Filterung des Quellensignals im Sinne einer "räumlichen Codierung". Die Wirkung ist unterhalb etwa 150 Hz vernachlässigbar, d.h. entsprechend tieffrequente Quellensignale sind hinsichtlich der binauralen Auswertung irrelevant.

Periphere Stufe A:

Es gilt nicht nur für die monaurale, sondern ebenso für die binaurale Signalverarbeitung als erwiesen, daß die Auswertung jedes Ohrsignals frequenzselektiv geschieht. Das Gehör zerlegt die Ohrsignale in schmalbandige Anteile f1, f2.. fn. Die Analysebandbreite der betreffenden Schmalband-Fitter entspricht den Frequenzgruppenbreiten, die bei monauralen Experimenten gemessen werden, d.h. die auch physiologisch nachgewiesene periphere Frequenzselektivität wird sowohl bei monauraler als auch bei binauraler Signalverarbeitung wirksam.

Periphere Stufe B:

Ebenfalls physiologisch und psychoakustisch begründet ist der folgende periphere Modellbaustein B zur Nachbildung der neuronalen Eigenschaften. Die Ausgangssignale der Haarzellen, welche in der Cochlea die mechanische Schwingungsform entlang der Basilarmembran abtasten, sind Folgen von Nervenimpulsen (Spikes), deren zeitliche Dichte in dem betreffenden Frequenzband mit wachsendem Signalpegel zunimmt ("Pulsfrequenzmodulation"). Zur Beschreibung der für das Richtungshören wichtigen Eigenschaften der Nervenimpulsfolgen ist es in erster Näherung ausreichend, ein einfaches Receptor-Neuronen-Modell aus Halbweggleichrichtung und anschließender Tiefpaßfilterung für jede Frequenzgruppe vorzusehen. Die Halbweggleichrichtung berücksichtigt, daß die Haarzellen nur auf eine Halbwelle der Basilarmembranschwingung ansprechen. Der Tiefpaß 1. Ordnung mit einer Grenzfrequenz von ca. 800 Hz dient zur Gewinnung der Hüllkurve und berücksichtigt, daß die Aktivitätswahrscheinlichkeit der Neuronen mit steigender Signalfrequenz mehr und mehr der Hüllkurve und weniger der Feinstruktur der Basilarmembranbewegung folgt, im Bereich tiefer Frequenzen dagegen Proportionalität vorliegt.

Periphere Stufe C:

Die aus einem Dividierglied und einem rückgekoppelten RC-Glied dargestellte, nichtlineare Stufe C bewirkt für stationäre Signale eine Dynamikkompression, während schnelle Änderungen des Eingangssignals weitgehend linear übertragen werden. Hierdurch werden zeitliche Verdeckungseffekte (insbesondere Nachverdeckung) nachgebildet; ferner ist die Stufe C ebenso für wichtige binaurale Zeiteffekte primär verantwortlich (z.B. "Gesetz der ersten Wellenfront", "Franssen-Effekt"). Die Zeitkonstante für den Abfall der Hüllkurve liegt im Durchschnitt etwa bei 50 ms, dagegen für den Anstieg bei 1,25 ms = 1/800 Hz. Hierdurch ergibt sich eine hohe Informationsreduktion.

Periphere Stufe D:

Die Ausgangssignale der Stufe C werden in der peripheren Stufe D einer Zeit-Frequenztransformation (z.B. Fast-Fourier-Transformation) unterzogen, die die spektralen Eigenschaften der Hüllkurve darstellt. Sie ändern sich relativ langsam, was den Änderungen der Aktivitätszustände im akustischen Cortex entspricht. Die frequenzselektiven Ausgangssignale liegen als Muster der binauralen Verarbeitungsstufe (binauraler Processor) zeitgleich vor.

Binauraler Processor:

Für die frequenzselektive Verarbeitung im binauralen Processor wird angenommen:

1. Die Auswertung erfolgt durch Mustererkennungsmechanismen, d.h. durch Vergleich des aktuellen Signalmusters mit einem Vorrat gespeicherter (erlernter) Muster. Dies ist ein Prozeß, der ein aktuelles Signalmuster mit einem gespeicherten Muster verknüpft, selbst dann, wenn nur Teile des gespeicherten Musters im aktuellen Signalmuster enthalten sind oder wenn nur ein unvollständiges aktuelles Signalmuster vorliegt.

2. Voraussetzung für die Erkennung räumlicher Eigenschaften ist Kohärenz individueller kontralateraler Hüllkurven-Signale, ("binaural envelope coherence"), d.h. individuelle Hüllkurvensignale vom linken und rechten Ohr mit gleicher Frequenzlage stellen Musterelemente dar, die hinsichtlich ihrer binauralen Information ausgewertet werden.

3. Die so gewonnenen binauralen Informationen werden den entsprechenden, in einem separaten Mustererkennungsprozeß gewonnen, monauralen Informationen zugeordnet (orts- und gestaltsbestimmende Mustererkennung).

**Selektion der stereofonen Information**

In Hinblick auf die stereofone Codierung macht das Modell der binauralen Signalverarbeitung zunächst die wichtige Aussage, daß die Selektion der stereofonen Information möglich ist, wenn die Auswertung frequenzselektiv erfolgt, d.h. wenn eine Zerlegung in (möglichst frequenzgruppenbreite) Teilbänder vorgesehen wird. Die Eigenschaften der frequenzselektiven Signale an den Ausgängen der Stufen D sowie Eigenschaften der Mustererkennung geben Hinweise für die Codierung der stereofonen Zusatzsignale in den Teilbändern.

Eine hervorragende Bedeutung haben demnach die Hüllkurven aller Teilbandsignale. Im Bereich höherer Frequenzen (oberhalb etwa 1,5 kHz) lassen sie keine Auswertung der interauralen Phasendifferenzen zu. Dies ist sinnvoll, da oberhalb etwa 1,5 kHz die interaurale Phasendifferenz kein eindeutiges Richtungsmerkmal mehr darstellt. Lateralisationsexperimente zeigen, daß im gesamten Hörfrequenzbereich (ab etwa 150 Hz) interaurale Pegel- und Zeitdifferenzen der Hüllkurven zu einer seitlichen Auslenkung des Hörereignisses führen, dies aber bei interauralen Zeitdifferenzen der Signalfeinstrukturen nur im Frequenzbereich bis ca. 1,5 kHz geschieht. Mit amplitudenmoduliertem Hochpaßrauschen findet man selbst dann ein fusioniertes Hörereignis, wenn interaural unkorreliertes Rauschen verwendet wird, sofern nur beide Ohrsignale die gleichen Hüllkurven aufweisen.

Diese    Teilband-Hüllkurvenauswertung bedeutet bezüglich der stereofonen Codierung, daß die stereofone Information der oberen Teilbandsignale allein durch ihre Hüllkurven repräsentiert ist, und daß demzufolge die stereofonen Signale bei höheren Frequenzen zusammengefaßt werden dürfen, wenn vorher die Hüllkurven der oberen Teilbandsignale extrahiert worden sind. Diese stereofone Information ist geeignet, im Decoder eine subjektiv ausreichende Kanaltrennung wiederherzustellen, indem die monofonen Teilbandsignale mit den ursprünglichen Hüllkurven moduliert werden. Hierdurch entstehen stereofone Signale, die in höheren Frequenzlagen sich nur bezüglich ihrer Hüllkurven, nicht aber bezüglich der Signalfeinstruktur unterscheiden, und die dennoch ein unbeeinträchtigtes stereofones Klangbild sicherstellen. Voraussetzung dafür ist die hinreichend genaue Reproduktion der Teilband-Hüllkurven. Es hat sich bereits erwiesen, daß sogar bei grober zeitlicher Auflösung die resultierenden Qualitätsbeeinträchtigungen relativ gering sind. Sie lassen sich vollkommen vermeiden, wenn die Reduktion der Kanaltrennung nur zeitweise und insbesondere im obersten Frequenzbereich häufiger erfolgt als darunter.

Im folgenden sollen die in dem binauralen Processor auftretenden zeitlichen Effekte und deren Auswertung bei der stereofonen Codierung betrachtet werden. Das zeitliche Verhalten der Signale an den Ausgängen der Stufe D sowie der Prozeß der Mustererkennung bewirken Einschränkungen der binauralen Zeitanalyse, die sich durch drei Effekte ausdrücken:

- Der "Franssen-Effekt" besagt, daß zwei räumlich getrennte Schallereignisse ein einziges Hörereignis am Ort desjenigen Lautsprechers erzeugen, welcher die Einschwingvorgänge des einen Schallereignisses abstrahlt. Der eher stationäre Teil des anderen Schallereignisses ist für die Richtungszuweisung irrelevant.

- Das "Gesetz der ersten Wellenfront" besagt, daß zwei räumlich getrennte Schallereignisse ein einziges Hörereignis am Ort desjenigen Lautsprechers erzeugen, welcher das voreilende (impulsbehaftete) Tonsignal abstrahlt. Das verzögerte Tonsignal ist für die Richtungszuweisung irrelevant.

- Der "Trägheits-Effekt" besagt, daß Richtungsänderungen bei vorwiegend stationären Schallen erst ab einer bestimmten Änderungsdauer wahrscheinlich sind. Ein Stereosignal kann deshalb beispielsweise kurzzeitig ("weich") auf Mono geschaltet werden, ohne Störungen des stereofonen Klangbildes zu verursachen.

Es läßt sich als gemeinsames Merkmal der gesamten drei Effekte feststellen, daß eine Reihe kurzzeitiger Schallereignisse irrelevant ist bezüglich räumlicher Wahrnehmbarkeit und daher als räumliche Information entbehrlich ist. Diese irrelevanten Schallereignisse sind sogar länger, je schmalbandiger sie sind. Die zeitliche Lage dieser irrelevanten Schallereignisse bzw. Tonsignal-Abschnitte läßt sich anhand der Teilbandsignal-Hüllkurvenverläufe ermitteln; in erster Näherung liegen sie direkt hinter ihren Anstiegsflanken.

## Merkmale des Verfahrens

Der Kombinierer im Encoder sowie der Dekombinierer im Decoder ermöglichen es, teilband- und blockweise beliebige Matrizierungen und Dematrizierungen vorzunehmen bzw. aufzuheben. Hieraus ergeben sich einerseits vorteilhafte Möglichkeiten der Datenreduktion und andererseits Möglichkeiten der alternativen Nutzung der Tonübertragungskanäle, beispielsweise Übertragung alternativer Sprachen, abhängig von der Wahl der System-Konfiguration mittels der Eingabe.

## System-Konfiguration A

Diese System-Konfiguration repräsentiert die Datenreduktion für fünfkanalige stereofone Signale, d.h., es ist

$$S3 = C$$

$$S4 = LS$$

$$S5 = RS.$$

Der Kombinierer im Encoder matriziert die Signale L, R, C', LS', RS' gemäß den Gleichungen (1) bis (5), während im Dekombinierer des Decoders die Dematrizierung gemäß Gleichungen (6) bis (10) erfolgt. Die Datenreduktion geschieht durch folgende Maßnahmen:

### 1. Dynamisches Übersprechen

Eine hohe Datenreduktion für das Zusatzsignalpaket T3/T4/T5 ist erreichbar, indem nach Maßgabe einer geeigneten Signalanalyse in der Analysestufe in individuellen Teilbändern die Dematrizierung blockweise aufgehoben wird. Dies geschieht mit Hilfe einer blockweisen sogenannten "Punktierung" von Teilbandsignalen des Zusatzsignalpaketes T3/T4/T5 (Gleichungen (3), (4), (5)). Bei der Punktierung werden die Abtastwerte des entsprechenden Teilbandsignals encoderseitig im Kombinierer und/oder Quantisierer nach Maßgabe des Steuersignals COS und/oder der Bit-Zuweisungsinformation BAL zu Null gesetzt. Decoderseitig werden die fehlenden Abtastwerte in den Teilbändern durch übertragene Abtastwerte in den Teilbändern anderer Tonkanäle, jedoch gleicher Frequenzlage nach Maßgabe des Steuersignals COM substituiert. Die sustituierten Abtastwerte werden anschließend so in den Stufen gewichtet, daß eine Anpassung an die ursprünglichen Teilbandsignalpegel-Verhältnisse erfolgt. Zur Durchführung dieser Anpassung wird der Gewichtungsfaktor GEW in der Kontroll-Einheit aus den Skalenfaktoren SCF und dem Kombinier-Modus COM errechnet, beispielsweise mittels Interpolation aufeinanderfolgender Skalenfaktoren, um "harte" Pegelsprünge zu vermeiden.

Die Regeln für die Anwendung der Punktierung ergeben sich aus verschiedenen Gehöreigenschaften, die im vorstehenden im Einzelnen erläutert worden sind. Grundsätzlich erfolgt die Punktierung in einer Weise, daß die für die binaurale Signalverarbeitung relevante Information im Zusatzsignalpaket T3/T4/T5 erhalten bleibt. Somit lassen sich die im Stereo-Basissignalpaket Lo/Ro zusammengefaßten Einzelsignale decoderseitig den ursprünglichen Tonkanälen so weit zuordnen, daß das stereofone Klangbild subjektiv wieder hergestellt wird.

Im Einzelnen werden die Tonsignale in der Analysestufe hinsichtlich folgender Punktierungs-Kriterien analysiert:

- Teilbandsignal-Dynamik
  Gemäß dem "Franssen-Effekt" und dem "Gesetz der 1. Wellenfront" können Teilbandsignalblöcke punktiert werden, welche einem Transienten folgen und sich stationär oder quasi-stationär verhalten.

- Hüllkurven-Auswertung
  Die Auswertung der Hüllkurven der Teilbandsignale im binauralen Modell erlaubt es, Punktierungen in Detailbändern höherer Frequenzlage häufiger vorzunehmen als in den Teilbändern tieferer Frequenzlage.

- Signalenergie-Verhältnisse
  Die Energie eines Teilbandes läßt sich aus dessen Skalenfaktoren SCF ableiten. Die Aufsummierung der Signalenergien sämtlicher Teilbänder ergibt die Signalenergie des gesamten Tonsignals. Durch Vergleich der Signalenergie der einzelnen Teilbänder mit der Signalenergie des gesamten Tonsignals läßt sich ein weiteres Kriterium für die Punktierung ableiten. Und zwar können Punktierungen in denjenigen Teilbändern häufiger erfolgen, in denen die Signalenergie bezogen auf die Signalenergie des gesamten Tonsignals realativ gering ist. Unter "relativ gering" versteht man beispielsweise ein Verhältnis von 1/i, wobei i die Anzahl der Teilbänder je Tonkanal ist.

- Trägheits-Effekt des menschlichen Gehörs
  Wie vorstehend bereits erwähnt, versteht man unter dem "Trägheits-Effekt" des menschlichen Gehörs, daß Richtungsänderungen bei vorwiegend stationären Schallen erst ab einer bestimmten Änderungsdauer wahrscheinlich sind. Daraus resultieren zwei Möglichkeiten für eine Punktierung:

  a) Wird nur eine kurzzeitige Richtungsänderung im Decoder dedektiert, können die dafür verantwortlichen Teilbänder dennoch punktiert werden.

  b) Wenn Punktierungen nur kurzzeitig erfolgen, beispielsweise aus Gründen einer kurzzeitigen Überlastung des Übertragungskanals für den Datenstrom MUX, kann das Gehör die dadurch verursachten Störungen in der räumlichen Abbildung wahrnehmen.

- Teilweise Nachbarkanal-Verdeckung
  Der bereits erwähnte Effekt der "Nachbarkanal-Verdeckung" kann nicht nur - wie im Folgenden noch im Einzelnen ausgeführt wird - zur Festlegung der Quantisierung oder zur Unterdrückung einzelner Teilbandsignale ausgenutzt werden, sondern auch als weiteres Punktierungs-Kriterium herangezogen werden. Beispielsweise können solche Teilbänder, die nur teilweise bzw. nicht vollständig durch Nachbarkanäle verdeckt werden, eher punktiert werden als solche Teilbänder, die keiner Nachbarkanal-Verdeckung unterliegen.

- Redundanz-Ausnutzung
  Aufgrund der Kompatibilitätsmatrizierung gemäß Gleichungen (1) bis (5) sind zeitweise einzelne Teilbandsignale von T1 und/oder T2 mit entsprechenden Teilbandsignalen gleicher Frequenzlage von T3, T4 und/oder T5 vollständig oder nahezu identisch. Aufgrund dieser Redundanz kann auf die Übertragung von identischen Teilbandsignalen gleicher Frequenzlage in dem Zusatzsignalpaket T3/T4/T5 verzichtet werden. Decoderseitig werden die punktierten Teilbandsignale des Zusatzsignal-Paketes T3/T4/T5 bei der Rekombination nur in ihrem ursprünglichen Tonkanal substituiert. Fehlt beispielsweise ein Teilbandsignal des Center-Kanals S3 im Zusatzsignal-Paket T3/T4/T5, so muß decoderseitig dafür gesorgt werden, daß aus dem linken oder rechten Signal des Stereo-Basissignal-Paketes Lo/Ro nur in dem Center-Wiedergabekanal S3' substituiert wird, jedoch nicht in den beiden anderen Wiedergabekanälen S4' und S5' Darüberhinaus müssen die Center-Anteile in den Stereo-Basissignalen Lo' und Ro' vom Dekombinierer unterdrückt werden, da aufgrund des fehlenden Center-Kanals die Dematrizierung gemäß Gleichungen (6) bis (8) nicht mehr möglich ist.

- Alias-Verzerrungen

  Infolge der durch die Punktierung bedingten, nicht-vollständigen Rekonstruktion des Tonsignals im Decoder findet die Auslöschung der Alias-Verzerrungen bei der Rückfilterung in den Synthesefilterbänken nicht vollständig statt. Diese restlichen Alias-Verzerrungen lassen sich im Encoder vorherbestimmen, so daß ihre Maskierung berechnet werden kann. Bei fehlender Maskierung darf keine Punktierung erfolgen.

- Negative Korrelation

  Tritt eine negative Korrelation, d. h., Gegenphasigkeit, zwischen Teilbandsignalen gleicher Frequenzlage auf, so hat dies bei der Matrizierung gemäß Gleichungen (1) und (2) zur Folge, daß in dem Links- oder Rechts-Signal des Stereo-Basissignal-Paketes Lo/Ro Auslöschungen auftreten. Diese Auslöschungen werden bei der Dematrizierung gemäß Gleichungen (6) und (7) rückgängig gemacht. Diese Rückgängigmachung unterbleibt jedoch, wenn infolge einer Punktierung eines der Signale T3, T4 oder T5 nicht übertragen wird. Aus diesem Grunde darf bei der Feststellung einer negativen Korrelation keine Punktierung erfolgen.

## 2. Gemeinsame Mithörschwelle

Die Bitzuweisung der Teilbandsignale in den einzelnen Tonkanälen wird auf der Basis des Signal/Maskierungsabstandes bei einer Berücksichtigung aller Tonkanäle und aller i Teilbänder berechnet. Unter Signal/Maskierungsabstand wird das Verhältnis von maximalem Teilbandsignalpegel zu minimaler Mithörschwelle in einem Teilband verstanden.

Daher ist es notwendig, für jeden der Tonkanäle den maximalen Signalpegel und die minimale Mithörschwelle pro Teilband und pro zeitlichem Block zu bestimmen. Die minimale Mithörschwelle wird in der Analysestufe aus einer der Teilbandfilterung parallelgeschalteten Fourieranalyse, der ein psychoakustisches Modell folgt, berechnet. Diese Parallelkonzeption hat den Vorteil, daß damit eine unzureichende Frequenzzerlegung der Filterbank kompensiert werden kann, da einerseits eine gute Spektralauflösung - gegeben durch die Fourieranalyse - für die Bestimmung der spektralen Mithörschwellen notwendig ist und andererseits eine gute Zeitauflösung - gegeben durch die Filterbank - der einzelnen Tonkanäle gegeben ist.

Durch diese Parallelkonzeption können auch Frequenzen und Pegel von Alias-Komponenten ermittelt werden, was besonds wichtig ist hinsichtlich der Operationen, die durch den Kombinierer durchgeführt werden. Die Entscheidungen dieser speziellen Signalanalyse in werden in das Steuersignal COS, das den Kombinierer steuert, miteingefügt.

Zum Beispiel haben Experimente gezeigt, daß für den zeitlichen Block zur Berechnung der Mithörschwelle etwa 24 ms ausreichen, was bei einer Abtastfrequenz der Tonkanäle von 48 kHz 1152 Eingangs-PCM Werten entspricht und einen guten Kompromiß zwischen zeitlicher Folge des Tonsignals und/oder baulicher Komplexität der Analysestufe darstellt.

Die Berechnung der genaueren Frequenzauflösung ist jedoch nur encoderseitig notwendig, nicht jedoch im Decoder, was für eine Massenproduktion von Decodern wichtig ist.

Die Berechnung der gemeinsamen Mithörschwelle und des davon abgeleiteten Signal/Maskierungsabstandes beruht auf folgenden Schritten:

1. Schritt
   Berechnung der Fouriertransformation zur Zeit/Frequenztransformation der einzelnen Tonkanalsignale.

2. Schritt
   Bestimmung des Signalpegels in jedem Teilband für jedes Tonkanalsignal.

3. Schritt
   Bestimmung der Ruhehörschwelle, wobei je nach Qualitätsanforderung ein zusätzlicher Sicherheitsspielraum zur Erhöhung der Übertragungsdynamik eingesetzt wird.

4. Schritt
   Bestimmung der tonalen, d.h. durch einen reinen Ton repräsentierten Komponenten und der mehr geräuschhaften Anteile eines Tonkanals, um eine Unterscheidung in tonale Maskierer und Rauschmaskierer verfügbar zu haben.

5. Schritt
   Reduzierung der tonalen und geräuschhaften Komponenten auf gehörphysiologisch relevante Anteile durch Berücksichtigung der gegenseitigen Verdeckung dieser Komponenten und der Verdeckung durch die Ruhehörschwelle.

6. Schritt
   Berechnung der individuellen, d. h. einzelnen Mithörschwellen der relevanten Anteile der tonalen und geräuschhaften Komponenten.

7. Schritt
   Bestimmung der globalen Mithörschwelle pro Tonkanal.

8. Schritt

Bestimmung der minimalen Mithörschwelle in jedem Teilband pro Tonkanal.

9. Schritt

Bestimmung des maximalen Wertes aller minimalen Mithörschwellen in Teilbändern gleicher Frequenzlage der unmatrizierten Tonkanalsignale L, R, C, LS, RS.

10. Schritt

Berücksichtigung des Effektes einer reduzierten Verdeckung bei räumlich getrennten Maskierern ("Masking Level Difference" = MLD) bei der Bestimmung des maximalen Wertes gemäß Schritt 9 im Sinne einer Verringerung des ermittelten maximalen Wertes.

11. Schritt

Berücksichtigung einer Ausdehnung der Abhörzone bei der Bestimmung des maximalen Wertes gemäß Schritt 9 und 10. Da die Berechnung der MLD grundsätzlich nur für einen einzigen Abhörort Gültigkeit hat, wird der nach Schritt 9 und 10 ermittelte Maximalwert der gemeinsamen Mithörschwelle zusätzlich reduziert.

**System-Konfiguration B**

Diese System-Konfiguration wird repräsentiert zum einen durch eine Datenreduktion bekannter Art für die zweikanaligen stereofonen Signale L und R und zum anderen durch eine davon völlig unabhängige Datenreduktion für die Kanäle S3, S4 und S5. Die Kanäle S3, S4 und S5 können dabei voneinander unabhängige Programminhalte aufweisen, beispielsweise als reine Kommentar-Kanäle genutzt werden; sie können aber auch ein weiteres stereofones Tonsignalpaar und einen unbenutzten oder einen beliebigen anderen Tonkanal umfassen. In dem Kombinierer erfolgt bei der System-Konfiguration B keine Matrizierung der Tonkanäle, d. h., der Kombinierer ist funktionslos. In der Analysstufe erfolgt nicht mehr die Berechnung einer gemeinsamen Mithörschwelle für die Kanäle S3 bis S5; vielmehr wird für jeden einzelnen Kanal S3 bis S5 die individuelle Mithörschwelle berechnet, woraus entsprechend unterschiedliche Bit-Zuweisungsinformationen BAL für die Quantisierungsstufen generiert werden. Desweiteren unterbleibt in der Analysestufe eine Datenredutkion nach den Regeln des dynamischen Übersprechens (Punktierung). Besonders vorteilhaft für die Konfiguration B ist der Encoder gemäß der oben beschriebenen zweiten Ausführungsform, bei welchem der Datenstrom MUX in den Datenstrom MUXo eingemischt wird. Sämtliche fünf Tonkanalsignale, deren Bitfluß jeweils zeitlich variiert, werden in einen gemeinsamen, festen Datenrahmen eingefügt. Da sich im statistischen Mittel die Bitflußschwankungen der fünf Tonkanäle näherungsweise kompensieren, ergibt sich eine verbesserte Ausnutzung der Übertragungs- oder Speicherkapazität des kombinierten Datenstromes MUXo*.

Auf der Decoderseite kann der Dekombinierer bei der System-Konfiguration B als Kanalselektor und als Kanalmischer eingesetzt werden, je nach Steuerung der Kontroll-Einheit durch die Wiedergabe-Konfigurationseingabe.

Desweiteren erzeugt die Analysestufe des Encoders bei der System-Konfiguration B keine Differenz-Skalenfaktorwerte SCF; anstelle dessen werden die Skalenfaktorwerte SCF der Kanäle S3 bis an den Multiplexer gegebenenfalls in codierter Form weitergeleitet. Encoderseitig werden von der Kontroll-Einheit die Skalenfaktoren SCFo ignoriert.

**Patentansprüche**

1. Verfahren zum Übertragen oder Speichern digitalisierter, mehrkanaliger Tonsignale, bei dem encoderseitig

   a) jedes Tonsignal durch eine Vielzahl spektraler Teilbandsignale digital dargestellt wird, wobei für jedes Teilbandsignal zeitdiskrete, quantisierte Abtastwerte vorliegen;

   b) die Quantisierung der Abtastwerte in den einzelnen Teilbändern nach Maßgabe der kanalspezifischen Intra-Kanal-Mithörschwelle des menschlichen Gehörs im Sinne einer Irrelevanzreduktion geändert (codiert) wird;

   c) für jedes Teilbandsignal ein Skalenfaktor (SCF) bestimmt wird, welcher den Spitzenwert des Teilbandsignals innerhalb eines bestimmten Zeitintervalls (Blocks) klassiert und welcher zur Normierung des Teilbandsignals vor der Quantisierung benutzt wird;

   d) für die Steuerung der Quantisierung der Abtastwerte jedes Teilbandsignals aus einer Tonsignalanalyse eine Bit-Zuweisungsinformation (BAL) gewonnen wird, welche zusammen mit den ermittelten Skalenfaktoren (SCF) und mit den codierten Teilbandsignalen gespeichert bzw. übertragen werden,
   und bei dem decoderseitig

   e) die codierten Teilbandsignale nach Maßgabe der Bit-Zuweisungsinformation (BAL) decodiert und die Teilbandsignalpegel nach Maßgabe der Skalenfaktoren (SCF) entnormiert werden;

   f) die decodierten und entnormierten Teilbandsignale jedes Tonkanals zu einem breitbandigen, digitalen Tonsignal zusammengesetzt werden,
**dadurch gekennzeichnet**, daß

g) encoderseitig die Teilbandsignale verschiedener Tonkanäle, jedoch gleicher Frequenzlage interkanalweise nach Maßgabe eines dynamischen Steuersignals (COS) kombiniert werden, welches durch eine an einem binauralen, psychoakustischen Modell orientierten Tonsignalanalyse von mehreren Tonkanälen gewonnen wird, und

h) decoderseitig die Teilbandsignale verschiedener Tonkanäle, jedoch gleicher Frequenzlage interkanalweise in Abhängigkeit von einer Steuergröße (COM) dekombiniert werden, welche von dein dynamischen Steuersignal (COS) abgeleitet und mitübertragen bzw. mitgespeichert wird.

2. Verfahren nach Anspruch 1, **dadurch gekennzeichnet**, daß encoderseitig mit Hilfe des Steuersignals (COS) und/oder der Bit-Zuweisungsinformation (BAL) eine Punktierung von Teilbandsignalen erfolgt, bei der die Abtastwerte des betreffenden Teilbandsignals nicht übertragen bzw. gespeichert werden, und daß decoderseitig die nichtübertragenen bzw. nichtgespeicherten Abtastwerte in den Teilbändern durch übertragene bzw. gespeicherte Abtastwerte in den Teilbändern anderer Tonkanäle, jedoch gleicher Frequenzlage nach Maßgabe der Steuergröße (COM) substituiert werden, wobei die substituierten Abtastwerte hinsichtlich ihrer Pegel an die ursprünglichen Pegelverhältnisse angepaßt werden.

3. Verfahren nach Anspruch 2, **dadurch gekennzeichnet**, daß für die Pegelanpassung aus den Skalenfaktoren (SCF) Gewichtungsfaktoren (GEW) errechnet werden, mit welchen die substituierten Abtastwerte gewichtet werden.

4. Verfahren nach Anspruch 2 oder 3, **dadurch gekennzeichnet**, daß die Punktierung in Abhängigkeit von der Erfassung einer Aufeinanderfolge von einem transienten und einem stationären Signalzustand desselben Tonkanals oder benachbarten Tonkanäle erfolgt.

5. Verfahren nach einem der Ansprüche 2 bis 4, **dadurch gekennzeichnet**, daß die Punktierung in den Teilbändern höherer Frequenzlage häufiger erfolgt als in den Teilbändern tieferer Frequenzlage.

6. Verfahren nach einem der Ansprüche 2 bis 5, **dadurch gekennzeichnet**, daß die Punktierung in denjenigen Teilbändern häufiger erfolgt, in denen die Signalenergie bezogen auf die Signalenergie des gesamten Tonsignals relativ gering ist.

7. Verfahren nach einem der Ansprüche 2 bis 6, **dadurch gekennzeichnet**, daß die Punktierung unter Ausnutzung des Trägheitseffektes des menschlichen Gehörs erfolgt.

8. Verfahren nach einem der Ansprüche 2 bis 7, **dadurch gekennzeichnet**, daß die Punktierung unter Ausnutzung der psychoakustischen Verdeckung von benachbarten Tonkanälen erfolgt.

9. Verfahren nach einem der Ansprüche 2 bis 7, **dadurch gekennzeichnet**, daß die Punktierung unter Ausnutzung von Redundanz in Teilbändern gleicher Frequenzlage von benachbarten Tonkanälen erfolgt, wobei decoderseitig die punktierten Teilbandsignale bei der Rekombination nur in ihrem ursprünglichen Tonkanal substituiert werden.

10. Verfahren nach einem der Ansprüche 2 bis 9, **dadurch gekennzeichnet**, daß die Punktierung nur dann erfolgt, wenn encoderseitig festgestellte Alias-Verzerrungen bezüglich der menschlichen Gehöreigenschaften irrelevant sind.

11. Verfahren nach einem der Ansprüche 2 bis 10, **dadurch gekennzeichnet**, daß die Punktierung unterbleibt, wenn zwischen Teilbandsignalen gleicher Frequenzlage eine negative Korrelation vorliegt.

12. Verfahren zum Übertragen oder Speichern digitalisierter, mehrkanaliger Tonsignale, bei dem encoderseitig

a) das Tonsignal jedes Tonsignals durch eine Vielzahl spektraler Teilbandsignale digital dargestellt wird, wobei für jedes Teilbandsignal zeitdiskrete, quantisierte Abtastwerte vorliegen;

b) die Quantisierung der Abtastwerte in den einzelnen Teilbändern nach Maßgabe der kanalspezifischen Intra-Kanal-Mithörschwelle des menschlichen Gehörs im Sinne einer Irrelevanzreduktion geändert (codiert) wird;

c) für jedes Teilbandsignal ein Skalenfaktor (SCF) bestimmt wird, welcher den Spitzenwert des Teilbandsignals innerhalb eines bestimmten Zeitintervalls (Blocks) klassiert und welcher zur Normierung des Teilbandsignals vor der Quantisierung benutzt wird;

d) für die Steuerung der Quantisierung der Abtastwerte jedes Teilbandsignals aus einer Tonsignalanalyse eine Bit-Zuweisungsinfomation (BAL) gewonnen wird, welche zusammen mit den ermittelten Skalenfaktoren (SCF) und mit den codierten Teilbandsignalen gespeichert bzw. übertragen werden,
und bei dem decoderseitig

e) die codierten Teilbandsignale nach Maßgabe der Bit-Zuweisungsinformation (BAL) decodiert und die Teilbandsignalpegel nach Maßgabe der Skalenfaktoren (SCF) entnormiert werden;

f) die decodierten und entnormierten Teilbandsignale jedes Tonkanals zu einem breitbandigen, digitalen Tonsignal zusammengesetzt werden,
**dadurch gekennzeichnet**, daß für den Fall einer stereofonen
Interkorrelation von Tonkanälen (Lo, Ro, C, L, S, R, S) encoderseitig die Quantisierung der Teilbandsignale der stereofon interkorrelierten Tonkanäle nach einer von einer gemeinsamen Mithörschwelle abgeleiteten Steuerinformation (BAL) erfolgt, wobei die gemeinsame Mithörschwelle aus den individuellen Mithörschwellen aller betrachteten Tonkanäle gebildet wird, und daß decoderseitig die Dequantisierung der Teilbandsignale der stereofon interkorrelierten Tonkanäle in Abhängigkeit von der Steuerinformation (BAL) erfolgt, welche mitübertragen bzw. mitgespeichert wird.

13. Verfahren nach Anspruch 12, **dadurch gekennzeichnet**, daß die gemeinsame Mithörschwelle unter Berücksichtigung des Maskierungsunterschiedes bei stereofoner Wiedergabe berechnet wird.

14. Verfahren zum Übertragen oder Speichern digitalisierter, mehrkanaliger Tonsignale, bei dem encoderseitig

a) das Tonsignal jedes Tonsignals durch eine Vielzahl spektraler Teilbandsignale digital dargestellt wird, wobei für jedes Teilbandsignal zeitdiskrete, quantisierte Abtastwerte vorliegen;

b) die Quantisierung der Abtastwerte in den einzelnen Teilbändern nach Maßgabe der kanalspezifischen Intra-Kanal-Mithörschwelle des menschlichen Gehörs im Sinne einer Irrelevanzreduktion geändert (codiert) wird;

c) für jedes Teilbandsignal ein Skalenfaktor (SCF) bestimmt wird, welcher den Spitzenwert des Teilbandsignals innerhalb eines bestimmten Zeitintervalls (Blocks) klassiert und welcher zur Normierung des Teilbandsignals vor der Quantisierung benutzt wird;

d) für die Steuerung der Quantisierung der Abtastwerte jedes Teilbandsignals aus einer Tonsignalanalyse eine Bit-Zuweisungsinformation (BAL) gewonnen wird, welche zusammen mit den ermittelten Skalenfaktoren (SCF) und mit den codierten Teilbandsignalen gespeichert bzw. übertragen werden,
und bei dem decoderseitig

e) die codierten Teilbandsignale nach Maßgabe der Bit-Zuweisungsinformation (BAL) decodiert und die Teilbandsignalpegel nach Maßgabe der Skalenfaktoren (SCF) entnormiert werden;

f) die decodierten und entnormierten Teilbandsignale jedes Tonkanals zu einem breitbandigen, digitalen Tonsignal zusammengesetzt werden,
**dadurch gekennzeichnet**, daß encoderseitig die Teilbandsignale verschiedener Tonkanäle, jedoch gleicher Frequenzlage interkanalweise in Abhängigkeit des entsprechend der Systemkonfiguration gewählten Tondarstellungsformates der Tonkanäle kombiniert werden, und daß decoderseitig die Teilbandsignale verschiedener Tonkanäle, jedoch gleicher Frequenzlage interkanalweise in Abhängigkeit eines Steuersignals (CFG) dekombiniert werden, welches von dem gewählten Tondarstellungsformat abgeleitet und mitübertragen bzw. mitgespeichert wird.

**Claims**

1. Process for transmitting or storing digitized multichannel audio signals, whereby on the encoder side

a) each audio signal is represented digitally by a number of spectral part-band signals, giving digital scan values that are discrete in time;

b) digitization of the scan values in the individual part-bands is modified (coded) according to the inter-channel monitoring threshold of the human ear in terms of irrelevance reduction;

c) for each part-band signal, a scale factor (SCF) is determined, which classifies the peak value of the part-band signal within a given time interval (block) and is used to scale the part-band signal before digitizing;

d) for control of digitization of the scan values of each part-band signal, bit assignment information (BAL) is obtained by audio signal analysis, which is stored or transmitted together with the determined scale factors (SCF) and coded part-band signals;
and on the decoder side:

e) the coded part-band signals are decoded according to the bit assignment information (BAL) and the part-band signal level is unscaled according to the scale factors (SCF);

f) the de-coded and unscaled part-band signals of each audio channel are combined to form a wide-band digital audio signal;
**characterised in that**

g) on the encoder side, the part-band signals of different audio channels but the same frequency position are combined between channels according to a dynamic control signal (COS), derived from several audio channels by audio signal analysis set on a binaural, psycho-acoustic model, and

h) on the decoder side, the part-band signals of different audio channels but the same frequency position are de-combined between channels depending on an actuating variable (COM), which is derived from the dynamic control signal (COS) and transmitted or stored at the same time.

2. Process as per claim 1, **characterised in that** on the encoder side, by means of the control signal (COS) and/or bit assignment information (BAL), the part-band signals are set at zero, whereby the scan values of the relevant part-band signals are not transmitted or stored, and on the decoder side the scan values not transmitted or stored in the part-bands are replaced by transmitted or stored scan values in the part-bands of other audio channels of the same frequency position according to the actuating variable (COM), whereby the replaced scan values are adapted in terms of level to the original level conditions.

3. Process as per claim 2, **characterised in that** for level adaptation, weighting factors (GEW) are determined from the scale factors (SCF), for weighting the substituted scan values.

4. Process as per claim 2 or 3, **characterised in that** zero-settingting depends on determination of a sequence of one transient and one static signal status on the same audio channel or adjacent audio channel.

5. Process as per one of claims 2 to 4, **characterised in that** zero-setting of the part-bands of higher frequency positions is more frequent than in the part-bands of lower frequency positions.

6. Process as per one of claims 2 to 5, **characterised in that** zero-setting is more frequent in those part-bands in which the signal energy is relatively low in relation to the signal energy of the overall audio signal.

7. Process as per one of claims 2 to 6, **characterised in that** zero-setting takes place using the inertial effect of the human ear.

8. Process as per one of claims 2 to 7, **characterised in that** zero-setting takes place using the psycho-acoustic masking of adjacent audio channels.

9. Process as per one of claims 2 to 7, **characterised in that** zero-setting takes place using redundancy in part-bands of the same frequency position of adjacent audio channels, whereby on the decoder side, on re-combination, the zero-set part-band signals are substituted in their original audio channel only.

10. Process as per one of claims 2 to 9, **characterised in that** zero-setting only takes place when alias distortion detected on the encoder side is irrelevant in terms of the properties of the human ear.

11. Process as per one of claims 2 to 10, **characterised in that** zero-setting ceases if there is a negative correlation between part-band signals of the same frequency position.

12. Process for transmitting or storing digitized multi-channel audio signals, whereby on the encoder side

a) the audio signal of each audio signal is represented digitally by a number of spectral part-band signals, giving digital scan values that are discrete in time;

b) digitization of the scan values in the individual part-bands is modified (coded) according to the inter-channel monitoring threshold of the human ear in terms of irrelevance reduction;

c) for each part-band signal, a scale factor (SCF) is determined, which classifies the peak value of the part-band signal within a given time interval (block) and is used to scale the part-band signal before digitizing;

d) for control of digitization of the scan values of each part-band signal, bit assignment information (BAL) is obtained by audio signal analysis, which is stored or transmitted together with the determined scale factors (SCF) and coded part-band signals;
and on the decoder side:

e) the coded part-band signals are decoded according to the bit assignment information (BAL) and the part-band signal level is unscaled according to the scale factors (SCF);

f) the de-coded and unscaled part-band signals of each audio channel are combined to form a wide-band digital audio signal;
**characterised in that** in the case of stereophonic
intercorrelation of audio channels (Lo, Ro, C, L, S, R, S) on the encoder side, digitization of the part-band signals of the stereophonically intercorrelated audio channels is based on control information (BAL) from a common monitoring threshold, whereby the common monitoring threshold is formed from the individual monitoring thresholds of all the audio channels concerned, and that on the decoder side, de-digitization of the part-band signals of the stereophonically intercorrelated audio channels is based on the control information (BAL), which is transmitted or stored at the same time.

13. Process as per claim 12, **characterised in that** the common monitoring threshold is calculated taking into account the masking difference on stereophonic reproduction.

14. Process for transmitting or storing digitized multi-channel audio signals, whereby on the encoder side

a) the audio signal of each audio signal is represented digitally by a number of spectral part-band signals, giving digital scan values that are discrete in time;

b) digitization of the scan values in the individual part-bands is modified (coded) according to the inter-channel monitoring threshold of the human ear in terms of irrelevance reduction;

c) for each part-band signal, a scale factor (SCF) is determined, which classifies the peak value of the part-band signal within a given time interval (block) and is used to scale the part-band signal before digitizing;

d) for control of digitization of the scan values of each part-band signal, bit assignment information (BAL) is obtained by audio signal analysis, which is stored or transmitted together with the determined scale factors (SCF) and coded part-band signals;
and on the decoder side:

e) the coded part-band signals are decoded according to the bit assignment information (BAL) and the part-band signal level is unscaled according to the scale factors (SCF);

f) the de-coded and unscaled part-band signals of each audio channel are combined to form a wide-band digital audio signal;
**characterised in that** on the encoder side, the part-band signals of different audio channels but with the same frequency position are combined between channels dependent on the sound representation format of the audio channels selected according to the system configuration, and that on the decoder side, the part-band signals of different audio channels of the same frequency position are de-combined between channels dependent on a control signal (CFG), which is derived from the selected sound representation format and transmitted or stored at the same time.

## Revendications

1. Procédé de transmission ou de mémorisation de signaux audio numérisés et multicanaux dans lequel, du côté du codeur,

a) chaque signal audio est représenté numériquement par une multiplicité de signaux de sous-bande spectraux, des échantillons quantifiés et temporels discrets étant présents pour chaque signal de sous-bande,
b) la quantification des échantillons est modifiée (codée) dans les sous-bandes individuelles conformément au seuil d'écoute intracanal spécifique au canal de l'oreille humaine, au sens d'une réduction non significative,
c) pour chaque signal de sous-bande est déterminé un facteur d'échelle (SCF) qui classe la valeur de crête du signal de sous-bande dans les limites d'un intervalle de temps (bloc) déterminé et qui est utilisé pour la normalisation du signal de sous-bande avant la quantification,
d) pour le contrôle de la quantification des échantillons de chaque signal de sous-bande à partir d'une analyse du signal audio est obtenue une information sur l'affectation de bits (BAL) qui est mémorisée et transmise en même temps que les facteurs d'échelle (SCF) déterminés et que les signaux de sous-bande codés

et, du côté du décodeur,

e) les signaux de sous-bande codés sont décodés conformément à l'information sur l'affectation de bits (BAL)et les niveaux de signaux de sous-bande sont dénormalisés conformément aux facteurs d'échelle (SCF),

f) les signaux de sous-bande décodés et dénormalisés de chaque canal audio sont regroupés pour former un signal audio numérique à large bande,

caractérisé en ce que

g) du côté du codeur, les signaux de sous-bande de différents canaux audio, cependant de même position en fréquence, sont combinés sous forme d'intercanal conformément à un signal de commande (COS) dynamique qui est obtenu par une analyse du signal audio orientée vers un modèle binaural, psycho-acoustique de plusieurs canaux audio et

h) en ce que, du côté du décodeur, les signaux de sous-bande de différents canaux audio, cependant de même position en fréquence, sont décombinés sous forme d'intercanal, en fonction d'une grandeur de commande (COM) qui est dérivée du signal de commande (COS) dynamique, est transmise ou mémorisée en même temps.

2. Procédé selon la revendication 1, caractérisé en ce que, du côté du décodeur, à l'aide du signal de commande (COS) et/ou de l'information sur l'affectation de bits (BAL), a lieu un pointillage de signaux de sous-bande dans lequel les échantillons du signal de sous-bande concerné ne sont pas transmis ni mémorisés et en ce que, du côté du décodeur, les échantillons non transmis et non mémorisés des sous-bandes sont substitués par des échantillons transmis et mémorisés des sous-bandes d'autres canaux audio, cependant de même position en fréquence, conformément à la grandeur de commande (COM), les échantillons substitués étant réglés, en ce qui concerne leur niveau, aux conditions initiales de niveau.

3. Procédé selon la revendication 2, caractérisé en ce que, pour le réglage du niveau, des facteurs de pondération (GEW) par lesquels les échantillons substitués sont pondérés, sont calculés à partir des facteurs d'échelle (SCF).

4. Procédé selon la revendication 2 ou 3, caractérisé en ce que le pointillage est effectué en fonction de l'enregistrement d'une séquence d'un état transitoire de signal et d'un état stationnaire de signal du même canal audio ou des canaux audio adjacents.

5. Procédé selon l'une quelconque des revendications 2 à 4, caractérisé en ce que le pointillage a lieu plus fréquemment dans les sous-bandes de haute fréquence que dans les sous-bandes de basse fréquence.

6. Procédé selon l'une quelconque des revendications 2 à 5, caractérisé en ce que le pointillage a lieu plus fréquemment dans les sous-bandes dans lesquelles l'énergie du signal est relativement faible en référence à l'énergie du signal audio global.

7. Procédé selon l'une quelconque des revendications 2 à 6, caractérisé en ce que le pointillage a lieu sous l'effet de l'exploitation de l'effet d'inertie de l'oreille humaine.

8. Procédé selon l'une quelconque des revendications 2 à 7, caractérisé en ce que le pointillage a lieu sous l'effet de l'exploitation du masquage psycho-acoustique de canaux audio adjacents.

9. Procédé selon l'une quelconque des revendications 2 à 7, caractérisé en ce que le pointillage a lieu sous l'effet de l'exploitation de la redondance dans des sous-bandes de même position en fréquence de canaux audio adjacents à l'occasion de quoi, du côté décodeur, les signaux de sous-bande pointillés ne sont substitués lors de la recombinaison que dans leur canal audio initial.

10. Procédé selon l'une quelconque des revendications 2 à 9, caractérisé en ce que le pointillage n'a lieu que si lesdites distorsions constatées du côté de l'encodeur ne sont pas significatives en référence aux propriétés de l'oreille humaine.

11. Procédé selon l'une quelconque des revendications 2 à 10, caractérisé en ce que le pointillage n'a pas lieu si une corrélation négative se présente entre des signaux de sous-bande de même position en fréquence.

12. Procédé de transmission ou de mémorisation de signaux audio numérisés et multicanaux dans lequel, du côté du codeur,

a) le signal audio de chaque signal audio est représenté numériquement par une multiplicité de signaux de sous-bande spectraux, des échantillons quantifiés et temporels discrets étant présents pour chaque signal de sous-bande,

b) la quantification des échantillons est modifiée (codée) dans les sous-bandes individuelles conformément au seuil d'écoute intracanal spécifique au canal de l'oreille humaine, au sens d'une réduction non significative,

c) pour chaque signal de sous-bande est déterminé un facteur d'échelle (SCF) qui classe la valeur de crête du signal de sous-bande dans les limites d'un intervalle de temps (bloc) déterminé et qui est utilisé pour la normalisation du signal de sous-bande avant la quantification,

d) pour le contrôle de la quantification des échantillons de chaque signal de sous-bande à partir d'une analyse du signal audio est obtenue une information sur l'affectation de bits (BAL) qui est mémorisée et transmise en même temps que les facteurs d'échelle (SCF) déterminés et que les signaux de sous-bande codés,

et du côté du décodeur,

e) les signaux de sous-bande codés sont décodés conformément à l'information sur l'affectation de bits (BAL)et les niveaux de signaux de sous-bande sont dénormalisés conformément aux facteurs d'échelle (SCF),

f) les signaux de sous-bande décodés et dénormalisés de chaque canal audio sont regroupés pour former un signal audio numérique à large bande,

caractérisé en ce que, dans le cas d'une intercorrélation stéréophonique de canaux audio (Lo, Ro, C, L, S, R, S), du côté de l'encodeur, la quantification des signaux de sous-bande des canaux audio intercorrélés stéréophoniquement a lieu selon une information de commande (BAL) dérivée d'un seuil d'écoute commun, le seuil d'écoute commun étant formé par les seuils d'écoute individuels de tous les canaux audio considérés et en ce que, du côté du décodeur, la déquantification des signaux de sous-bande des canaux audio intercorrélés stéréophoniquement a lieu en fonction de l'information de commande (BAL) qui est transmise et mémorisée en même temps.

13. Procédé selon la revendication 12, caractérisé en ce que le seuil d'écoute commun est calculé en prenant en considération la différence de masquage lors de la reproduction stéréophonique.

14. Procédé de transmission ou de mémorisation de signaux audio numérisés et multicanaux dans lequel, du côté du codeur,

a) le signal audio de chaque signal audio est représenté numériquement par de multiples signaux de sous-bande spectraux, des échantillons quantifiés et temporels discrets étant présents pour chaque signal de sous-bande,
b) la quantification des échantillons est modifiée (codée) dans les sous-bandes individuelles conformément au seuil d'écoute intracanal spécifique au canal de l'oreille humaine, au sens d'une réduction non significative,
c) pour chaque signal de sous-bande est déterminé un facteur d'échelle (SCF) qui classe la valeur de crête du signal de sous-bande dans les limites d'un intervalle de temps (bloc) déterminé et qui est utilisé pour la normalisation du signal de sous-bande avant la quantification,

d)pour le contrôle de la quantification des échantillons de chaque signal de sous-bande à partir d'une analyse du signal audio est obtenue une information sur l'affectation de bits (BAL) qui est mémorisée et transmise en même temps que les facteurs d'échelle (SCF) déterminés et que les signaux de sous-bande codés,

et du côté du décodeur,

e) les signaux de sous-bande codés sont décodés conformément à l'information sur l'affectation de bits (BAL)et les niveaux de signaux de sous-bande sont dénormalisés conformément aux facteurs d'échelle (SCF),

f) les signaux de sous-bande décodés et dénormalisés de chaque canal audio sont regroupés pour former un signal audio numérique à large bande,

caractérisé en ce que, du côté du codeur, les signaux de sous-bande de différents canaux audio, cependant de même position en fréquence, sont combinés sous forme d'intercanal en fonction du format de représentation audio des canaux audio choisi selon la configuration du système et, en ce que, du côté du décodeur, les signaux de sous-bande de différents canaux audio, cependant de même position en fréquence, sont décombinés sous forme d'intercanal, en fonction d'un signal de commande (CFG) qui est dérivé du format de représentation audio choisi et qui est transmis ou mémorisé en même temps.